# EUROPEAN PATENT SPECIFICATION

(11) **EP 1 843 872 B1**
(45) Date of publication and mention of the grant of the patent: **05.11.2014**
(21) Application number: 06706209.1
(22) Date of filing: 10.01.2006
(51) Int. Cl.: B23K 35/28, C22C 21/02, B32B 15/01

(54) **ALUMINIUM ALLOY BRAZING MATERIAL**
LÖTMATERIAL FÜR ALUMINIUMLEGIERUNG
MATERIAU POUR BRASAGE A BASE D'ALLIAGE D'ALUMINIUM

(30) Priority: 04.02.2005 EP 05075292; 22.07.2005 EP 05076694
(43) Date of publication of application: 17.10.2007
(73) Proprietor: Aleris Rolled Products Germany GmbH, 56070 Koblenz (DE)
(72) Inventor: MEIJERS, Steven, Dirk, NL-1822 ME Alkmaar (NL)
(74) Representative: Müller Schupfner & Partner Patent- und Rechtsanwaltspartnerschaft mbB
(86) International application number: PCT/EP2006/000234
(87) International publication number: WO 2006/081923

(56) References cited:
- WO-A-01/68312
- WO-A-03/089237
- FR-A- 2 354 171
- GB-A- 1 545 107
- US-A- 3 853 547
- US-A- 4 211 827
- PATENT ABSTRACTS OF JAPAN vol. 017, no. 648 (M-1518), 2 December 1993 (1993-12-02) & JP 05 208296 A (KOBE STEEL LTD), 20 August 1993 (1993-08-20)
- PATENT ABSTRACTS OF JAPAN vol. 2000, no. 20, 10 July 2001 (2001-07-10) & JP 2001 079684 A (DENKI KAGAKU KOGYO KK), 27 March 2001 (2001-03-27)

## Description

This invention relates to aluminium alloy brazing material which is substantially lithium-free and calcium-free, and to a brazed assembly including, as a joining material, a resolidified aluminium alloy brazing material.

### BACKGROUND OF THE INVENTION

Brazing is commonly used to assemble a complex structure, such as a heat exchanger, made of aluminium or aluminium alloy components. Generally, a clad layer of brazing material is provided on at least one component, and forms a fillet of resolidified material joining two components, following brazing. Alternatively, a fillet of aluminium alloy brazing material is added to the structure before brazing, to form a joining fillet of resolidified material in the brazed product. In recent years, there has been much improvement in the corrosion resistance of aluminium alloy sheets and tubes used in such structures. As a result, the present inventors have perceived that the corrosion resistance performance of the structure may become determined by the corrosion resistance of the fillet, rather than by the corrosion resistance of the base materials.

There is little in the literature describing study of corrosion of the resolidified clad or fillet. In unpublished work, we have found that (i) the addition of Zn to the clad material is ineffective to improve corrosion resistance of the brazed product (somewhat contradicting some published work mentioned below) and (ii) adding Cu to the clad decreased the corrosion resistance of the tube to which the clad was applied (the reason for this is believed to be that the beneficial potential difference between diffusion zone and clad disappears, which results in poor core corrosion performance).

Clad materials typically have a high Si content, for example 10 wt%. In one published study, Chen, Wu & Li, "The effects of trace elements on Al-Si alloys brazing filler metal", Hanjie Xuebao (1985) vol. 6, no. 2, pp. 55 (in Chinese), small additions of Na, Sr, La or Ce improved the corrosion behaviour, while Bi made it worse. This was measured by comparing the strength of the joint before and after corrosion testing. Kuroda & Tohma, "Electrochemical properties of Al-Si brazing filler, Aluminium Alloys-Their physical and mechanical properties", Proceedings of the 6th International Conference on Aluminium Alloys, ICAA-6, Japan, 1998, pp. 1543, report the effects of alloy elements in the clad (filler) alloy on the corrosion behaviour of the filler material. The effect of Si, Zn and Cu was studied. Corrosion was found preferentially in the eutectic phase. The conclusion reached was that a clad (filler) alloy containing a large amount of Zn may give better performance against pitting of the core. Similarly Takemoto, Okamoto. & Kurishima, "Sacrificial anode type Al-10Si-1Mg brazing filler metals for suppression of corrosion of brazed 3003 aluminium. alloy", Transactions of _ JWRI (1986), vol. 15, no. 2, pp. 111, added 0.5% Fe to a filler containing 10% Si, 1% Mg and different levels of Zn or Sn, to study the corrosion behaviour of the AA3003 core alloy. No effect of Fe was found, while Zn and Sn improved the corrosion performance of the core alloy. The same authors Takemoto & Okamoto, "Effect of iron content in brazing filler metals on corrosion of brazed aluminium", Transactions of JWRI (1986), vol. 15, no. 2, pp. 101, have reported no effect of the iron content, up to 1.4 wt%, in the 10 wt% Si filler alloy on the corrosion behaviour of AA3003 or pure aluminium. A slight effect was found on AA1100.

Outside the field of brazing materials, there have been studies on the corrosion behaviour of precipitates or intermetallic compounds, which are often found in AA3xxx type alloys. These precipitates are typically Al (Mn, Fe) Si and Al (Mn, Fe), the iron being usually present as an impurity in commercial alloys. Nisancioglu & Lunder, "Significance of the electrochemistry of Al-base intermetallics in determining the corrosion behaviour of aluminium alloys", Aluminium Alloys - Physical and mechanical properties, Charlottesville USA (1986), pp. 1125, discuss these questions, and show that Mn has an effect to reduce the corrosion potential of the AlMnFe phase. It was also shown that, in alloys with 0.7 wt% Fe, Si levels up to 0.3% proved to be beneficial.

Zamin, "The role of Mn in the corrosion behaviour of Al-Mn alloys", Corrosion (1981), vol. 37, no. 11, pp. 627, studied the corrosion behaviour of laboratory-cast Al-Mn alloys, and found that the corrosion behaviour improves with the increasing Mn/Fe ratio. A similar effect was shown by Fukuzuka, Shimogori & Fujiwara, "Relationship between the initiation of microscopic pitting corrosion and the composition of the Al6MnxFe1-x intermetallic compounds in aluminium-manganese alloys", Boshoku Gijutsu (1979) vol. 28, pp. 323 (in Japanese).

In the light of the disclosure of the invention below, attention is also drawn to US-A-4648918, which describes an abrasion resistant aluminium alloy which is used for the production of mechanical parts by extrusion and has a content of 7.5 to 15 wt% of Si, 3.0 to 6.0 wt% of Cu, 0.3 to 1.0 wt% of Mg, 0.25 to 1.0 wt% of Fe and 0.25 to 1.0 wt% of Mn, balance Al and impurities. Secondly, mention is made of US-A-4854495, which discloses, in the production of electronic components and semiconductor to 1.0 wt% of Mn, balance Al and impurities. Secondly, mention is made of US-A-4854495, which discloses, in the production of electronic components and semiconductor components where soldering of ceramic and metal is desired, the use of a high-melting jointing material comprising a core material comprised of aluminium-1.3% manganese alloy with a skin layer comprised of aluminium-10% silicon-2% manganese alloy.

GB 1 545 107 discloses an improved aluminium-silicon brazing composition consisting of 7 to 14% silicon, 0.2 to 2% magnesium, at least 0.05 but less than 0.3% tin, less than 0.6% iron, less than 0.3% manganese and less than 0.15% incidental impurities (less than 0.05% each of Cu, Ni, Zn, Ti and others), and a balance aluminium.

### SUMMARY OF THE INVENTION

The object of the present invention is to provide aluminium alloy brazing material having improved corrosion resistance of the resolidified clad or fillet in the brazed structure, bearing in mind that in a commercially produced alloy, iron is inevitably to be found.

According to the present invention there is provided an aluminium alloy brazing material which is substantially lithium-free and calcium-free, and comprising the composition, in weight percent:

| | |
|---|---|
| Si | 5.0 to 14.0, preferably 7.0 - 12.0 |
| Fe | 0.1 - 0.7, preferably 0.2 - 0.6 |
| Mn | 0.3 - 1.0, preferably 0.4 - 0.8 |
| Mg | max. 2.0 |
| Zn | max. 1.0, |

optionally a wetting agent as alloying element up to 1 wt.% selected from the group consisting of lead, bismuth, antimony, tin, silver, thallium, indium, and any mixture thereof, and
balance Al and inevitable impurities, wherein the aluminium alloy brazing material has an Mn/Fe ratio in weight percent of at least 2/1.

### BRIEF DESCRIPTION OF THE DRAWING

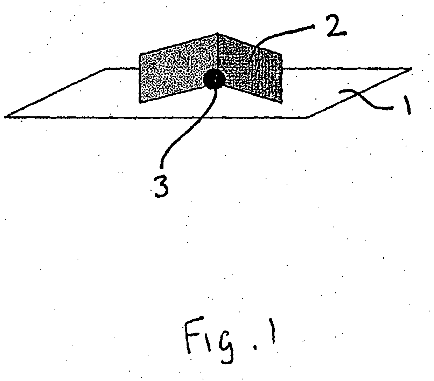

Fig. 1 shows a brazed structure.

### DETAILED DESCRIPTION OF THE PREFERRED EMBODIMENTS

The invention is based on the finding that, in a brazing material, for example a clad or filler layer, containing a high Si content, Mn can play a significant role in improving the corrosion performance of the resolidified brazing material in a brazed product.

The term "substantially free" means having no significant amount of that component purposely added to the alloy composition, e.g. at a level of <0.005% and more preferably absent, it being understood that trace amounts of incidental elements and/or impurities may find their way into a desired end product.

Particularly the Mn/Fe ratio in weight percent is at least 2. It is also believed to be desirable to select the amount of Mn such that, in an intermetallic phase in the resolidified brazing material containing Mn and Fe, the ratio of Mn/Fe in weight percent is at least 0.4, preferably at least 0.5, more preferably at least 0.7.

The invention further provides a product suitable for brazing, having a base (core) of aluminium or aluminium alloy and a clad layer on said base having a lower melting point than said base, wherein the clad layer is aluminium alloy brazing material of the invention as described above.

The invention further provides a brazed assembly comprising at least two members joined by an aluminium alloy brazing material of the invention as set out above. Typically this brazing material is in the form of a clad layer on one of the members or a fillet joining the two members.

In the aluminium alloy brazing material of the invention, the amount of Si is selected in a conventional manner, to provide the desired brazing properties of the alloy.

The amount of Fe depends primarily on the origin of the alloy material.

The amount of Mn is in the range 0.3 to 1.0%, because below 0.2% the effect of improved corrosion resistance is not found. The amount of Mn is at least 0.3%, and preferably at least 0.4%, to provide improved corrosion resistance. With a view to the properties of the alloy, the amount of Mn should be not more than 1.0%. The preferred maximum is 0.8%, since above this level the improved corrosion resistance may be less.

The amount of Mg is chosen in accordance with the intended type of brazing of the particular product. For CAB brazing, a relatively low level of Mg may be present, e.g. up to 0.4%. For vacuum brazing, a higher level, up to 2.0% preferably not more than 1%, is suitable.

Zn is an impurity element which can be tolerated to a level of up to 1%, and is Zn is an impurity element which can be tolerated to a level of up to 1%, and is preferably not more than 0.5%.

The brazing material comprises optionally a wetting agent as alloying element in a range of up to 1 wt.%, and preferably up to 0.8 wt.% in order to improve the wettability of the brazing material during the brazing process, in particular during vacuum brazing or controlled atmosphere brazing (CAB) in the absence of a brazing flux material. And the wetting agent is selected from the group consisting of lead, bismuth, antimony, tin, silver, thallium, indium, and any mixture thereof.

The balance of the composition is aluminium and inevitable impurities, and preferably maximum impurities in total preferably 0.20 wt%, with no element more than 0.05 wt%.

Preferred embodiments of this aluminium alloy are also substantially sodium-free and beryllium-free.

### EXAMPLES

The invention will now be illustrated by non-limitative examples.

For the purposes of study, seven alloys suitable for the use as brazing filler materials (clad or fillet) were cast, having the compositions given in Table 1. Alloys 1, 2 and 3 are comparative, and have an increasing amount of Fe without Mn. Alloys 4 and 5 (comparative examples), and alloys 6 and 7 have an increasing amount of Mn, with constant Fe.

**Table 1.**

| Amounts in wt.%, balance is aluminium plus inevitable impurities. | | | | | |
|---|---|---|---|---|---|
| **Alloy No.** | **Mn** | **Fe** | **Si** | **Mg** | **Melting Temperature (°C)** |
| **1** | <0.01 | 0.06 | 10.2 | 0.03 | 578.2 |
| **2** | <0.01 | 0.26 | 10.2 | 0.03 | 577.6 |
| **3** | <0.01 | 0.52 | 10.1 | 0.03 | 576.8 |
| **4** | 0.21 | 0.28 | 10.1 | 0.03 | 579.0 |
| **5** | 0.42 | 0.28 | 10.2 | 0.03 | 578.6 |
| **6** | 0.49 | 0.27 | 10.0 | 0.03 | 579.1 |
| **7** | 0.81 | 0.28 | 10.1 | 0.03 | 579.5 |

Just before casting, 1 kg/ton AlTiB5/1 was added as a grain refiner.

DSC (Differential Scanning Calometry, also known as Differential Scanning Calorimetry) was used to determine the melting temperature (onset of melting) of the alloys, since the effect of Mn on the melting point was not known. The melting points show that the melting temperature will not affect the brazing properties of these alloys.

These filler alloys were used to form fillets in a brazed structure, shown in Fig. 1, in which the sheet 1 and the angular coupon 2 are AA3003 aluminium alloy. The brazing alloy forms the fillet 3. In each sample about 85 mg filler alloy was used, and the samples were brazed using 2 g/m² flux.

Corrosion tests were performed on both the filler alloys as cast, and on the brazed fillets. Polished samples were exposed to a NaCl solution (3%, twice for 90 minutes) light microscopy pictures were taken before and after corrosion on the same location. Corrosion was qualitatively established from the visible local attack around second phase particles. For the alloys as cast, it was found that the corrosion performance deteriorates with increasing Fe content, for alloys 1, 2 and 3. On the other hand, the corrosion attack clearly decreased with increasing Mn content in the alloys 4, 5 and 7. The corrosion performance of alloy 6 was similar to that of alloy 5.

Similarly, using light microscopy images, corrosion was inspected for the fillets of the brazed product shown in Fig. 1. Corrosion after 90 and 180 minutes exposure in 3% NaCl was studied. While there was not much difference between the corrosion attack on alloys 1 and 2, there was much more corrosion for alloy 3. All four of alloys 4, 5, 6 and 7 showed improved corrosion resistance, compared with the fillet of alloy 2. The optimum effect was achieved for alloys 5 and 6, with alloy 7 showing a less good performance than alloys 5 and 6.

From these results, improved corrosion resistance is expected for the brazing material of the invention, when used as a clad layer as a member on an aluminium or aluminium alloy base (core) in a construction subjected to brazing, with resolidification of the material of the clad layer. The brazing material of the invention can be applied for example to constructions such as heat exchangers.

Having now fully described the invention, it will be apparent to one of ordinary skill in the art that many changes and modifications can be made without departing from the spirit or scope of the invention as herein described.

## Claims

1. A brazing member having a base of aluminium or aluminium alloy and a clad layer on said base, the clad layer having a lower melting point than said base, and wherein said clad layer is of an aluminium alloy brazing material having lithium < 0.005 wt.% and calcium < 0.005 wt.%, and comprising the composition, in wt.%:
Si 5.0 to 14.0
Fe 0.1 to 0.7
Mn 0.3 to 1.0
Mg max. 2.0
Zn max. 1.0, and
optionally a wetting agent as alloying element up to 1% selected from the group consisting of lead, bismuth, antimony, tin, silver, thallium, indium, and any mixture thereof, inevitable impurities each 0.05 max., and total 0.20 max., the balance Al, wherein the aluminium alloy brazing material has an Mn/Fe ratio in weight percent of at least 2/1.

2. A brazing member according to claim 1, wherein the aluminium alloy brazing material having an intermetallic phase containing Mn and Fe in a ratio of Mn/Fe in weight percent of at least 0.4/1, and preferably at least 0.5/1.

3. A brazing member according to claim 2, wherein the aluminium alloy brazing material having an intermetallic phase containing Mn and Fe in a ratio of Mn/Fe in weight percent of at least 0.7/1.

4. A brazing member according to claim 1, wherein the aluminium alloy brazing material has a Si-content in a range of 7.0 to 12.0%.

5. A brazing member according to any one of claims 1 to 4, wherein the aluminium alloy brazing material has an Mn-content in a range of 0.4 to 1.0%.

6. A brazing member according to claim 5, wherein the Mn-content is in a range of 0.4 to 0.8%.

7. A brazing member according to any one of claims 1 to 6, wherein the aluminium alloy brazing material has a Mg-content in a range of up to 1%, and preferably in a range of up to 0.4%.

8. A brazing member according to any one of claims 1 to 7, wherein the aluminium alloy brazing material has a Zn-content is in a range of up to 0.5%.

9. A brazing member according to any one of claims 1 to 8, wherein the aluminium alloy brazing material has an Fe-content in the range of 0.1 to 0.6%, and preferably in the range of 0.2 to 0.6%.

10. A brazing member according to any one of claims 1 to 9, wherein the aluminium alloy brazing material has a wetting agent as alloying element is present in a range of up to 0.8%.

11. A brazing member according to any one of claims 1 to 10, wherein the aluminium alloy brazing material has sodium < 0.005 wt.%.

12. A brazing member according to any one of claims 1 to 11, wherein the aluminium alloy brazing material has beryllium < 0.005 wt.%.

13. A brazed assembly comprising at least two members joined by a brazing member according to any one of claims 1 to 12.

## Patentansprüche

1. Hartlötteil mit einer Basis aus Aluminium oder Aluminiumlegierung und einer Plattierschicht auf der Basis, wobei die Plattierschicht einen niedrigeren Schmelzpunkt aufweist als die Basis, und wobei die Plattierschicht aus einem Hartlötmaterial aus Aluminiumlegierung ist, das Lithium < 0,005 Gew.-% und Calcium < 0,005 Gew.-% aufweist, und die Zusammensetzung in Gew.-% aufweist%:
| | |
|---|---|
| Si | 5,0 bis 14,0 |
| Fe | 0,1 bis 0,7 |
| Mn | 0,3 bis 1,0 |
| Mg | max. 2,0 |
| Zn | max. 1,0, und |
optional ein Benetzungsmittel als Legierungselement bis zu 1 %, ausgewählt aus der Gruppe, die aus Blei, Wismut, Antimon, Zinn, Silber, Thallium, Indium und einer beliebigen Mischung davon besteht, unvermeidliche Verunreinigungen je max. 0,05 und insgesamt max. 0,20, der Rest Al, wobei das Hartlötmaterial aus Aluminiumlegierung ein Mn/Fe-Verhältnis in Gewichtsprozent von mindestens 2/1 aufweist.

2. Hartlötteil nach Anspruch 1, wobei das Hartlötmaterial aus Aluminiumlegierung eine intermetallische Phase aufweist, die Mn und Fe in einem Verhältnis von Mn/Fe in Gewichtsprozent von mindestens 0,4/1, und vorzugsweise mindestens 0,5/1 aufweist.

3. Hartlötteil nach Anspruch 2, wobei das Hartlötmaterial aus Aluminiumlegierung eine intermetallische Phase aufweist, die Mn und Fe in einem Verhältnis von Mn/Fe in Gewichtsprozent von mindestens 0,7/1 aufweist.

4. Hartlötteil nach Anspruch 1, wobei das Hartlötmaterial aus Aluminiumlegierung einen Si-Gehalt in einem Bereich von 7,0 bis 12,0% aufweist.

5. Hartlötteil nach einem der Ansprüche 1 bis 4, wobei das Hartlötmaterial aus Aluminiumlegierung einen Mn-Gehalt in einem Bereich von 0,4 bis 1,0% aufweist.

6. Hartlötteil nach Anspruch 5, wobei der Mn-Gehalt in einem Bereich von 0,4 bis 0,8% liegt.

7. Hartlötteil nach einem der Ansprüche 1 bis 6, wobei das Hartlötmaterial aus Aluminiumlegierung einen Mg-Gehalt in einem Bereich von bis zu 1 %, und vorzugsweise in einem Bereich von bis zu 0,4% aufweist.

8. Hartlötteil nach einem der Ansprüche 1 bis 7, wobei das Hartlötmaterial aus Aluminiumlegierung einen Zn-Gehalt in einem Bereich von bis zu 0,5% aufweist.

9. Hartlötteil nach einem der Ansprüche 1 bis 8, wobei das Hartlötmaterial aus Aluminiumlegierung einen Fe-Gehalt im Bereich von 0,1 bis 0,6%, und vorzugsweise im Bereich von 0,2 bis 0,6% aufweist.

10. Hartlötteil nach einem der Ansprüche 1 bis 9, wobei das Hartlötmaterial aus Aluminiumlegierung ein Benetzungsmittel als Legierungselement aufweist, das in einem Bereich von bis zu 0,8% vorhanden ist.

11. Hartlötteil nach einem der Ansprüche 1 bis 10, wobei das Hartlötmaterial aus Aluminiumlegierung < 0,005 Gew.-% Natrium aufweist.

12. Hartlötteil nach einem der Ansprüche 1 bis 11, wobei das Hartlötmaterial aus Aluminiumlegierung < 0,005 Gew.-% Beryllium aufweist.

13. Hartgelötete Einheit, die mindestens zwei Teile enthält, welche durch ein Hartlötteil nach einem der Ansprüche 1 bis 12 miteinander verbunden werden.

## Revendications

1. Élément de brasage ayant une base d'aluminium ou d'alliage d'aluminium et une couche de revêtement sur ladite base, la couche de revêtement ayant un point de fusion inférieur à ladite base, et dans lequel ladite couche de revêtement est en un matériau de brasage à base d'alliage d'aluminium ayant une teneur en lithium < 0,005 % en poids et en calcium < 0,005 % en poids, et comprenant la composition suivante, en pourcentage en poids :
Si 5,0 à 14,0
Fe 0,1 à 0,7
Mn 0,3 à 1,0
Mg maximum 2,0
Zn maximum 1,0, et
en option un agent de mouillage à titre d'élément d'alliage jusqu'à 1 %, sélectionné parmi le groupe comprenant plomb, bismuth, antimoine, étain, argent, thallium, indium et un mélange quelconque de ceux-ci, des impuretés inévitables à raison de 0,05 au maximum pour chacune, et 0,20 au maximum au total, le reste étant Al, et dans lequel le matériau de brasage à base d'alliage d'aluminium présente un rapport Mn/Fe, en pourcentage en poids, d'au moins 2/1.

2. Élément de brasage selon la revendication 1, dans lequel le matériau de brasage à base d'alliage d'aluminium présente une phase intermétallique contenant Mn et Fe dans un rapport Mn/Fe, en pourcentage en poids, d'au moins 0,4/1, et de préférence d'au moins 0,5/1.

3. Élément de brasage selon la revendication 2, dans lequel le matériau de brasage à base d'alliage d'aluminium présente une phase intermétallique contenant Mn et Fe dans un rapport Mn/Fe, en pourcentage en poids, d'au moins 0,7/1.

4. Élément de brasage selon la revendication 1, dans lequel le matériau de brasage à base d'alliage d'aluminium contient une teneur en Si dans une plage de 7,0 à 12,0 %.

5. Élément de brasage selon l'une quelconque des revendications 1 à 4, dans lequel le matériau de brasage à base d'alliage d'aluminium contient une teneur en Mn dans une plage de 0,4 à 1,0 %.

6. Élément de brasage selon la revendication 5, dans lequel la teneur en Mn est dans une plage de 0,4 à 0,8 %

7. Élément de brasage selon l'une quelconque des revendications 1 à 6, dans lequel le matériau de brasage à base d'alliage d'aluminium contient une teneur en Mg dans une plage allant jusqu'à 1 %, et de préférence dans une plage allant jusqu'à 0,4 %.

8. Élément de brasage selon l'une quelconque des revendications 1 à 7, dans lequel le matériau de brasage à base d'alliage d'aluminium contient une teneur en Zn dans une plage allant jusqu'à 0,5 %.

9. Élément de brasage selon l'une quelconque des revendications 1 à 8, dans lequel le matériau de brasage à base alliage d'aluminium contient une teneur en Fe dans la plage de 0,1 à 0,6 %, et de préférence dans la plage de 0,2 à 0,6 %.

10. Élément de brasage selon l'une quelconque des revendications 1 à 9, dans lequel le matériau de brasage à base d'alliage d'aluminium contient un agent de mouillage à titre d'élément d'alliage, présent dans une plage allant jusqu'à 0,8 %.

11. Élément de brasage selon l'une quelconque des revendications 1 à 10, dans lequel le matériau de brasage à base d'alliage d'aluminium contient du sodium < 0,005 % en poids.

12. Élément de brasage selon l'une quelconque des revendications 1 à 11, dans lequel le matériau de brasage à base d'alliage d'aluminium contient du béryllium < 0,005 % en poids.

13. Assemblage brasé comprenant au moins deux éléments réunis par un élément de brasage selon l'une quelconque des revendications 1 à 12.
